# EUROPEAN PATENT APPLICATION

(11) **EP 2 868 799 A1**
(43) Date of publication of application: **06.05.2015**
(21) Application number: 13190792.5
(22) Date of filing: 30.10.2013
(51) Int. Cl.: D06M 15/693, D06M 15/70, D06M 15/705, D06M 15/71, B32B 27/12

(54) **Vehicle air-bag**

(71) Applicant: Autoliv Development AB, 447 83 Vårgårda (SE)
(72) Inventor: Kismir, Altay, Windsor, Ontario N8R 2E6 (CA); Winzinger, Wilhelm, Windsor, Ontario N8W 2T5 (CA); Bray, Denis, Chatham, Ontario N7M 6K9 (CA); Wootton, Gary, Stoke-on-Trent, Staffordshire ST7 3PH (GB)
(74) Representative: Beattie, Alex Thomas Stewart

(57) **Abstract**

An air-bag (1) for use in a vehicle, a portion of the air-bag (1) being woven and comprising a plurality of woven warp and weft yarns (3, 4) which are woven with a warp to weft ratio equal to or greater than 1.17, wherein a film (5) is dry laminated on at least part of the portion of the air-bag (1).

## Description

This invention relates to vehicle air-bags and methods of manufacturing vehicle air-bags. In particular, one embodiment of the invention concerns one piece woven (OPW) air-bags and methods of manufacturing the same.

It is desirable to reduce the cost and weight of a vehicle air-bag. This is particularly apparent for inflatable curtain (IC) air-bags which are typically large air-bags that are designed to be inflated to cover the side windows of a vehicle.

It is common to use a one piece woven (OPW) fabric to form an air-bag in order to meet the necessary rollover safety requirements. In order to maintain the pressure within an OPW air-bag, the fabric is usually coated with a wet coating material such as a silicone or polyurethane or a derivative of these materials. These coating materials are usually applied to an OPW fabric by dipping the OPW fabric into the coating material and then drying or curing the coating material in a line oven.

The coating material is necessary to maintain the required gas pressure within the air-bag upon inflation. In order to function correctly with a conventional coating material, the OPW fabric of the air-bag is normally tightly woven. Tight weaving is desirable to reduce the gas permeability of the fabric to reduce the need for add-on coating materials. Tight weaving is also desirable to prevent low viscosity coating materials from bleeding through the fabric.

One piece weaving usually requires a complex loom comprising expensive jacquards. Producing a tightly woven OPW fabric using a one piece weaving technique is normally time consuming and expensive because it takes a relatively long time to weave a tight fabric. The capital investment, labour and overhead required to produce a tightly woven OPW air-bag is therefore relatively high when compared with the cost of producing a less tightly woven OPW air-bag.

A tightly woven OPW fabric has a higher density than a more loosely woven OPW fabric. Therefore, an air-bag formed from a tightly woven OPW fabric will be heavier than an air-bag formed from a more loosely woven OPW fabric.

The present invention seeks to address at least the above mentioned problems.

According to one aspect of the invention there is provided an air-bag for use in a vehicle, a portion of the air-bag being woven and comprising a plurality of woven warp and weft yarns which are woven with a warp to weft ratio equal to or greater than 1.17, wherein a film is dry laminated on at least part of the portion of the air-bag.

Preferably, the air-bag is a one piece woven (OPW) air-bag.

Advantageously, the dry laminated film is not attached to the air-bag with a separate adhesive.

Preferably, the portion of the air-bag is woven with a warp to weft ratio of between 1.17 and 1.9.

Conveniently, the portion of the air-bag is woven with a warp to weft ratio of between 1.3 and 1.6.

Advantageously, the portion of the air-bag is woven with a warp to weft ratio of between 1.3 and 1.4.

Preferably, the warp and weft yarns each have a linear density of 235dtex, 350dtex, 470dtex or 550dtex.

According to another aspect of the present invention, there is provided a method of manufacturing an air-bag, the method comprising providing a portion of woven warp and weft yarns which are woven with a warp to weft ratio equal to or greater than 1.17, and dry laminating a film on at least part of the portion of woven warp and weft yarns.

Preferably, providing the portion of woven warp and weft yarns comprises weaving the warp and weft yarns using a one piece weaving technique.

Advantageously, the step of dry laminating the film comprises bringing the film in contact with the portion of the air-bag and heating the film.

Preferably, the step of dry laminating the film is carried out without using a separate adhesive between the film and the portion of the air-bag.

Conveniently, the method comprises weaving the warp and weft yarns with a warp to weft ratio of between 1.17 and 1.9.

Advantageously, the method comprises weaving the warp and weft yarns with a warp to weft ratio of between 1.3 and 1.6.

Preferably, the method comprises weaving the warp and weft yarns with a ratio of between 1.3 and 1.4.

Conveniently, the warp and weft yarns are each of a linear density of one of 235dtex, 350dtex, 470dtex or 550dtex.

So that the present invention may be more readily understood, embodiments of the present invention will now be described, by way of example, with reference to the accompanying drawings, in which:
Figure 1 is a diagrammatic sectional view of a portion of an air-bag of an embodiment of the invention,
Figure 2 is a diagrammatic sectional view of a portion of a dry lamination film,
Figure 3 is a diagrammatic sectional view of a two-layer portion of an air-bag and two film portions during an intermediate step of a method of manufacturing an air-bag,
Figure 4 is a diagrammatic sectional view of a portion of a dry laminated air-bag, and
Figure 5 is a table comparing the characteristics of OPW fabrics of embodiments of the invention with conventional OPW fabrics.

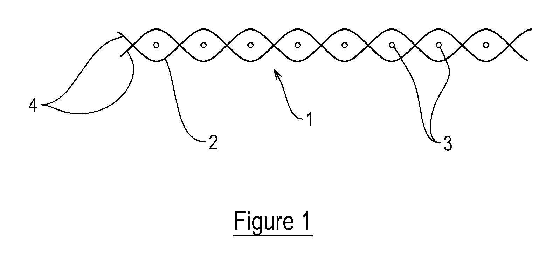

Referring to figure 1 of the accompanying drawings, an air-bag 1 comprises a portion 2 which is woven and comprises a plurality of woven warp yarns 3 and weft yarns 4. The warp and weft yarns 3, 4 are woven with a warp to weft ratio equal to or greater than 1.17. In this specification the warp to weft ratio is defined as being the ratio of the number of warp threads per unit length (counted in a direction perpendicular to the warp threads) to the number of weft threads per unit length (counted in a direction perpendicular to the weft threads). In one embodiment, the portion of the air-bag is woven with Nylon warp yarns of 470dtex at a density of 22 yarns/cm and Nylon weft yarns of 470dtex at a density of 16.5 yarns/cm such that the portion of the air-bag is woven with a warp to weft ratio of 1.33.

In further embodiments, the portion of the air-bag is woven with one of the following warp to weft ratios:
1) 22 yarn/cm 470dtex Nylon warp / 16.5 yarns/cm 470dtex PET weft: warp/weft ratio of 1.33
2) 22 yarn/cm 470dtex PET warp / 14 yarns/cm 470dtex Nylon weft: warp/weft ratio of 1.57
3) 22 yarn/cm 470dtex PET warp / 16.5 yarns/cm 470dtex PET weft: warp/weft ratio of 1.33
4) 22 yarn/cm 470dtex PET warp / 15 yarns/cm 470dtex PET weft: warp/weft ratio of 1.47
5) 22 yarn/cm 550dtex PET warp / 14 yarns/cm 550dtex PET weft: warp/weft ratio of 1.57
6) 22 yarn/cm 550dtex PET warp / 12 yarns/cm 550dtex PET weft: warp/weft ratio of 1.83

In other embodiments, the portion of the air-bag is formed with other linear density yarns of different polymer types, such as PET and other warp to weft ratios of equal to or greater than 1.17. In one embodiment, the warp to weft ratio is between 1.17 and 1.19. In another embodiment, the warp to weft ratio is between 1.3 and 1.6. In a further embodiment, the warp to weft ratio is between 1.3 and 1.4.

In embodiments of the invention, the linear density of each of the warp and weft yarns is one of 235dtex, 350dtex, 470dtex or 550dtex.

The air-bag 1 is manufactured by initially providing the woven portion 2 of the air-bag 1. In one embodiment, the portion 2 of the air-bag 1 is woven using a one piece weaving technique.

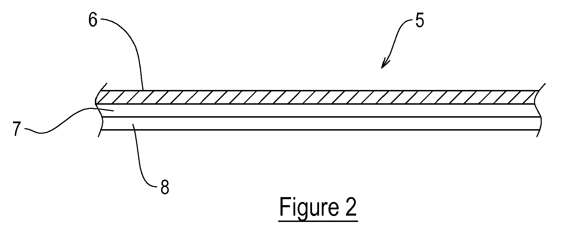

Referring now to figure 2 of the accompanying drawings, a film 5 is provided which is configured to be dry laminated to the air-bag 1. The film 5 is extruded from a plurality of integral layers which are not easily separated from one another. In this embodiment, the film 5 comprises a barrier layer 6, a middle layer 7 and a base layer 8.

The barrier layer 6 is substantially gas impermeable to provide a barrier to prevent gas permeating through the film 5. The middle layer 7 bonds the base layer 8 and the barrier layer 6 together. The middle layer 7 has a lower softening temperature than the barrier layer 6 and so the middle layer 7 is softer than the barrier layer 6 at room temperature. The base layer 8 has a lower softening temperature than the middle layer 7 and the barrier layer 6.

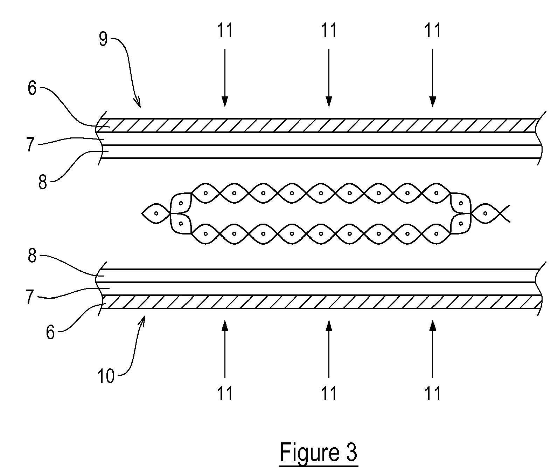

Referring now to figure 3 of the accompanying drawings, the method of manufacturing the air-bag 1 comprises dry laminating at least one portion of the film 5 to at least one side of the air-bag 1. In this embodiment, a first portion 9 of the film 5 is superimposed on the side of one layer of a two-layer portion of the air-bag 1 with the base layer 8 positioned closest to the air-bag 1. A second portion 10 of the film 5 is superimposed on the side of a second layer of the two-layer portion of the air-bag 1 with the base layer 8 closest to the air-bag 1. The air-bag 1 is thus sandwiched between the two portions 9, 10 of the film 5 with the barrier layer 6 of the portions 9, 10 of the film 5 forming the outermost layer of the structure.

The method comprises dry laminating the portions 9, 10 of the film 5 to the air-bag 1 using a lamination machine. In a preferred embodiment, a flat bed lamination machine is used to perform the dry lamination. The air-bag 1 and the two superimposed portions 9, 10 of the film 5 are fed into a lamination machine. The lamination machine is configured to increase the ambient temperature surrounding the air-bag and the superimposed film portions 9, 10 to at least 125°C. In a preferred embodiment, the lamination machine heats the air-bag 1 and the film portions 9, 10 to between 160°C to 170°C.

The base layers 8 of the film portions 9, 10 soften as they are heated. The film portions 9, 10 are brought into contact with the air-bag 1. A large pressure of at least 2,500psi is applied to the outer surface of each of the film portions 9, 10 in the directions generally indicated by arrows 11. In the preferred embodiment, the pressure is applied by pressure rollers which form part of the lamination machine. In the preferred embodiment, the pressure applied to the outer surface of the film portions 9, 10 is between 7,000psi to 10,000psi.

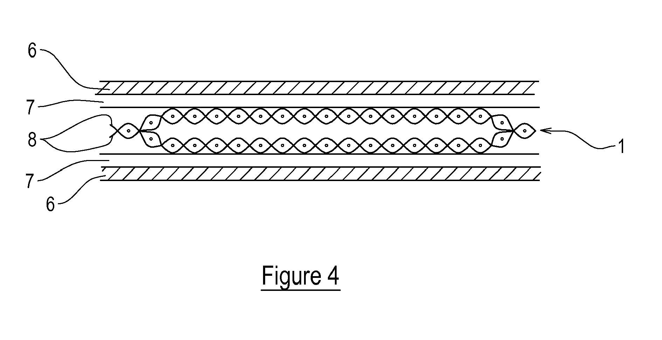

The combination of the softening of the base layer 8 of the film portions 9, 10 with the high pressure applied to the film portion 9 causes the base layers 8 to deform and bond with the surfaces of the air-bag 1. The film portions 9, 10 are thus dry laminated to each side of the air-bag 1 to produce the laminated structure shown in figure 4. The dry lamination process minimises bleed through of the film portions between the layers of the air-bag 1.

The three layers of the laminated structure defined by the air-bag 1 and the two layers of the film 5 are cooled in a cooling section of the lamination machine to less than 125°C and preferably to less than 100°C. As the structure cools, the base layers 8 recrystalise to complete the process of mechanically bonding the film portions 9, 10 to the surfaces of the air-bag 1. In this embodiment, the structure is finally re-rolled with pressure rollers.

The barrier layers 6 on either side of the air-bag 1 provide a barrier which substantially prevents gas from permeating through the structure. In other embodiments, only one portion of the film 5 is dry laminated to one side of the air-bag 1. It is to be appreciated that a single section of the film 5 laminated to one side of the air-bag 1 also substantially prevents gas from permeating through the structure.

In embodiments of the invention, the film 5 is not attached to the fabric of the air-bag 1 using a separate adhesive. No separate low viscosity adhesive is applied to bond the film 5 to the air-bag 1. This is advantageous since if a separate low viscosity adhesive was used then it would not be possible to use a low density fabric construction for the air-bag 1 since the adhesive would penetrate through the fabric of the air-bag 1 and connect the fabric layers together. A method using a separate adhesive would be similar to conventional silicone and urethane coatings which cannot be used effectively with a low weft and low density construction fabric.

The dry lamination of the film 5 on the fabric of the air-bag 1 allows the air-bag 1 to achieve a low gas permeability even with a weft count which is lower than a conventional air-bag. The combination of the dry laminated film 5 with the low weft count air-bag 1 having a warp to weft ratio of equal to or greater than 1.17 produces a lightweight air-bag 1 which has a low gas permeability.

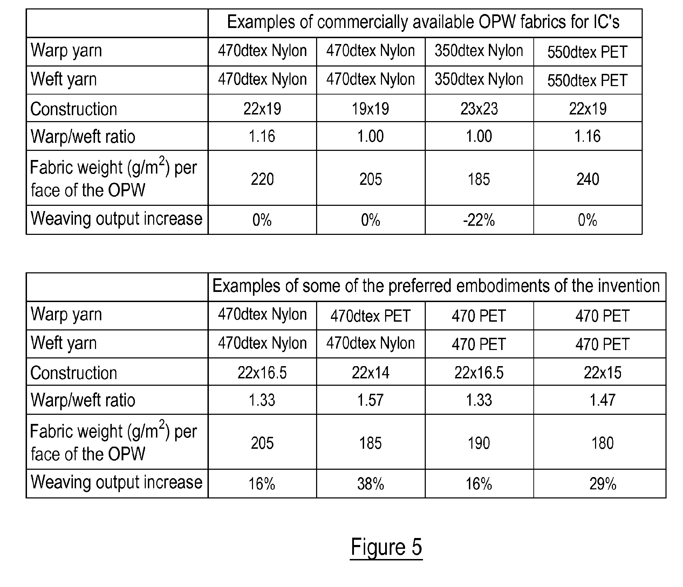

The table in figure 5 of the accompanying drawings shows how the weight of a one piece woven fabric is reduced when compared with conventional one piece woven fabrics. The table also illustrates a significant weaving output increase in the OPW fabrics of embodiments of the invention as compared with conventional OPW fabrics.

In the present specification "comprise" means "includes or consists of" and "comprising" means "including or consisting of".

## Claims

1. An air-bag for use in a vehicle, a portion of the air-bag (1) being woven and comprising a plurality of woven warp and weft yarns (3, 4) which are woven with a warp to weft ratio equal to or greater than 1.17, wherein a film (5) is dry laminated on at least part of the portion of the air-bag (1).

2. The air-bag of claim 1, wherein the air-bag (1) is a one piece woven (OPW) air-bag.

3. The air-bag of claim 1 or claim 2, wherein the dry laminated film (5) is not attached to the air-bag (1) with a separate adhesive.

4. The air-bag of any one of the preceding claims, wherein the portion of the air-bag (1) is woven with a warp to weft ratio of between 1.17 and 1.9.

5. The air-bag of any one of claims 1 to 3, wherein the portion of the air-bag (1) is woven with a warp to weft ratio of between 1.3 and 1.6.

6. The air-bag of any one of claims 1 to 3, wherein the portion of the air-bag (1) is woven with a warp to weft ratio of between 1.3 and 1.4.

7. The air-bag of any one of the preceding claims, wherein the warp and weft yarns (3, 4) each have a linear density of 235dtex, 350dtex, 470dtex or 550dtex.

8. A method of manufacturing an air-bag, the method comprising:
providing a portion of woven warp and weft yarns (3, 4) which are woven with a warp to weft ratio equal to or greater than 1.17, and
dry laminating a film (5) on at least part of the portion of woven warp and weft yarns (3, 4).

9. The method of claim 8, wherein providing the portion of woven warp and weft yarns (3, 4) comprises weaving the warp and weft yarns (3, 4) using a one piece weaving technique.

10. The method of claim 8 or claim 9, wherein the step of dry laminating the film (5) comprises bringing the film in contact with the portion of the air-bag (1) and heating the film (5).

11. The method of claim 10, wherein the step of dry laminating the film (5) is carried out without using a separate adhesive between the film and the portion of the air-bag (1).

12. The method of any one of claims 8 to 11, wherein the method comprises weaving the warp and weft yarns (3, 4) with a warp to weft ratio of between 1.17 and 1.9.

13. The method of any one of claims 8 to 11, wherein the method comprises weaving the warp and weft yarns (3, 4) with a warp to weft ratio of between 1.3 and 1.6.

14. The method of any one of claims 8 to 11, wherein the method comprises weaving the warp and weft yarns (3, 4) with a ratio of between 1.3 and 1.4.

15. The method of any one of claims 8 to 14, wherein the warp and weft yarns (3, 4) are each of a linear density of one of 235dtex, 350dtex, 470dtex or 550dtex.
